(19)

Europäisches Patentamt

European Patent Office

Office européen des brevets

(11)  **EP 4 691 630 A1**

(12)  **EUROPEAN PATENT APPLICATION**
published in accordance with Art. 153(4) EPC

(43)  Date of publication:
**11.02.2026  Bulletin 2026/07**

(21)  Application number: **24779474.6**

(22)  Date of filing: **13.03.2024**

(51)  International Patent Classification (IPC):
**B01J 23/78** (2006.01)      **B01J 23/80** (2006.01)
**B01J 23/825** (2006.01)      **C10G 2/00** (2006.01)

(52)  Cooperative Patent Classification (CPC):
**B01J 23/78; B01J 23/80; B01J 23/825; C10G 2/00**

(86)  International application number:
**PCT/JP2024/009815**

(87)  International publication number:
**WO 2024/203345 (03.10.2024 Gazette 2024/40)**

(84)  Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30)  Priority:  **28.03.2023  JP 2023051341**

(71)  Applicant: **HONDA MOTOR CO., LTD.
Minato-ku
Tokyo 107-8556 (JP)**

(72)  Inventors:
• **YAMAMOTO, Osami**
  **Wako-shi, Saitama 351-0193 (JP)**
• **TSUBAKI, Noritatsu**
  **Toyama-shi, Toyama 930-8555 (JP)**
• **HE, Yingluo**
  **Toyama-shi, Toyama 930-8555 (JP)**
• **WANG, Chengwei**
  **Toyama-shi, Toyama 930-8555 (JP)**

(74)  Representative: **Weickmann & Weickmann
PartmbB
Postfach 860 820
81635 München (DE)**

(54)  **CARBON DIOXIDE REDUCTION CATALYST, CARBON DIOXIDE REDUCTION CATALYST DEVICE, AND METHOD FOR PRODUCING JET FUEL**

(57)  The present invention addresses the problem of providing a carbon dioxide reduction catalyst capable of preferably producing C8-16 hydrocarbons through a hydrogenation reaction of carbon dioxide. An aspect for solving the problem is a carbon dioxide reduction catalyst for reducing carbon dioxide through a hydrogenation reaction of carbon dioxide to produce hydrocarbons. The carbon dioxide reduction catalyst contains Fe, Co, and Zn as catalyst metals and the content of Zn is 7.5-12.5 mass%, or contains Fe, Co, and Al as catalyst metals and the content of Al is 8.5-11.5 mass%.

FIG. 1

EP 4 691 630 A1

**Description**

TECHNICAL FIELD

The present invention relates to a carbon dioxide reduction catalyst, a carbon dioxide reduction catalyst device, and a method for producing a jet fuel.

BACKGROUND ART

Conventionally, efforts to mitigate climate change or reduce the effects of climate change have been ongoing, and exhaust gas regulation of automobiles has been further advanced to achieve this goal. In particular, there is a demand for a reduction in the amount of carbon dioxide emissions contained in exhaust gases from internal combustion engines.
In recent years, there has been known a technique for producing a fuel by subjecting carbon dioxide to a hydrogenation reaction. For example, as a catalyst for synthesizing methanol from a mixed gas of carbon dioxide and hydrogen, a catalyst including Cu, Zn, and alumina has been proposed (see Patent Document 1).
As a fuel obtained by subjecting carbon dioxide to a hydrogenation reaction, it is demanded to be able to produce a hydrocarbon having a carbon number of 5 or more, for example, which can be used as a liquid fuel. As such a technique, a method of preparing a highly branched product having a carbon number of 5 or more by using potassium as a co-catalyst with respect to an Fe catalyst in a Fischer-Tropsch (FT) synthesis reaction has been proposed (see Patent Document 2).

Citation List

Patent Document

Patent Document 1: Japanese Examined Patent Application Publication No. S45-16682
Patent Document 2: Japanese Unexamined Patent Application (Translation of PCT Application), Publication No. 2005-537340

DISCLOSURE OF THE INVENTION

Problems to be Solved by the Invention

Meanwhile, in efforts to reduce the emission amount of carbon dioxide, a technique relating to Sustainable Aviation Fuel (SAF), which is an aviation fuel produced from a biomass-derived raw material, waste, or the like, is attracting attention. It is preferable if the SAF can be produced directly from carbon dioxide using techniques related to the hydrogenation reaction of carbon dioxide. However, the hydrocarbon produced by the technique disclosed in Patent Document 2 has an issue that the production ratio of hydrocarbons having carbon numbers of about 8 to 16, which is a main component of SAF, is low.
The present invention has been made in view of the above, and an object of the present invention is to provide a carbon dioxide reduction catalyst capable of preferably producing hydrocarbons having carbon numbers of 8 to 16 by a hydrogenation reaction of carbon dioxide.

Means for Solving the Problems

(1) The present invention relates to a carbon dioxide reduction catalyst for reducing carbon dioxide by a hydrogenation reaction of carbon dioxide to produce hydrocarbons. The carbon dioxide reduction catalyst includes Fe, Co, and Zn as catalytic metals. The Zn has a content of 7.5 to 12.5 mass%.
According to the invention of (1), it is possible to provide a carbon dioxide reduction catalyst capable of preferably producing hydrocarbons having carbon numbers of 8 to 16 by a hydrogenation reaction of carbon dioxide.
(2) Further, the present invention relates to a carbon dioxide reduction catalyst for reducing carbon dioxide by a hydrogenation reaction of carbon dioxide to produce hydrocarbons. The carbon dioxide reduction catalyst includes Fe, Co, and Al as catalytic metals. The Al has a content of 8.5 to 11.5 mass%.
According to the invention of (2), it is possible to provide a carbon dioxide reduction catalyst capable of preferably producing hydrocarbons having carbon numbers of 8 to 16 by a hydrogenation reaction of carbon dioxide.

(3) The carbon dioxide reduction catalyst according to (1) or (2), further including Na as a catalytic metal. The Na has a content of 0.5 to 1.5 mass%.

According to the invention of (3), since the basicity of the catalyst can be increased and the adverse effect due to the coating of the reaction sites with Na can be avoided, the formation of by-products is suppressed, and hydrocarbons having carbon numbers of 8 to 16 can be more preferably produced.

(4) A carbon dioxide reduction catalyst device, including a second catalyst including Fe and at least one of Ga or Zr as catalytic metals, disposed upstream of the carbon dioxide reduction catalyst according to (1) or (2).

According to the invention of (4), since the second catalyst allows a reverse water gas shift reaction in which carbon dioxide is reduced to carbon monoxide and an FT synthesis reaction in which carbon monoxide is converted into hydrocarbons to be carried out in a single stage, and the carbon number of the hydrocarbons produced by the carbon dioxide reduction catalyst disposed downstream is increased, hydrocarbons having carbon numbers of 8 to 16 can be more preferably produced.

(5) A method for producing a jet fuel, including reducing carbon dioxide using the carbon dioxide reduction catalyst according to (1) or (2), and performing an upgrading process on a hydrocarbon obtained by reducing the carbon dioxide.

According to the invention of (5), by subjecting the higher hydrocarbon obtained by the carbon dioxide reduction step to the upgrading step, the production ratio of hydrocarbons having carbon numbers of 8 to 16 is improved, and a jet fuel can be efficiently produced.

BRIEF DESCRIPTION OF THE DRAWINGS

FIG. 1 is a graph showing the relationship between the amount of Al added and the $CO_2$ conversion ratio with respect to carbon dioxide reduction catalysts according to an Example and Comparative Examples of the present invention;

FIG. 2 is a graph showing the relationship between the amount of Al added and the $C_8$-$C_{16}$ selectivity in the Example and Comparative Examples;

FIG. 3 is a graph showing the relationship between the amount of Al added and the $C_8$-$C_{16}$ production ratio in the Example and Comparative Examples;

FIG. 4A is a graph showing the relationship between the carbon number and the hydrocarbon selectivity in Comparative Example 1;

FIG. 4B is a graph showing the relationship between the carbon number and the hydrocarbon selectivity in Comparative Example 2;

FIG. 4C is a graph showing the relationship between the carbon number and the hydrocarbon selectivity in Example 1;

FIG. 4D is a graph showing the relationship between the carbon number and the hydrocarbon selectivity in Comparative Example 3;

FIG. 5 is a graph showing the relationship between the amount of Zn added and the $CO_2$ conversion ratio in an Example and Comparative Examples;

FIG. 6 is a graph showing the relationship between the amount of Zn added and the $C_8$-$C_{16}$ selectivity in the Example and Comparative Examples;

FIG. 7 is a graph showing the relationship between the amount of Zn added and the $C_8$-$C_{16}$ production ratio in the Example and Comparative Examples;

FIG. 8A is a graph showing the relationship between the carbon number and the hydrocarbon selectivity in Comparative Example 5;

FIG. 8B is a graph showing the relationship between the carbon number and the hydrocarbon selectivity in Example 2;

FIG. 8C is a graph showing the relationship between the carbon number and the hydrocarbon selectivity in Comparative Example 6;

FIG. 9 shows the configuration of a carbon dioxide reduction catalyst device according to a first embodiment;

FIG. 10 shows the configuration of a carbon dioxide reduction catalyst device according to a modification of the first embodiment; and

FIG. 11 shows the configuration of a carbon dioxide reduction catalyst device according to a second embodiment.

PREFERRED MODE FOR CARRYING OUT THE INVENTION

<Carbon Dioxide Reduction Catalyst>

<<First Embodiment>>

A carbon dioxide reduction catalyst according to the present embodiment essentially contains Fe (iron), Co (cobalt), and Zn (zinc) as catalytic metals. In addition, Na (sodium) is preferably further contained. The carbon dioxide reduction reaction using the carbon dioxide reduction catalyst according to the present embodiment is a reaction of producing hydrocarbons by using a mixed gas of $H_2$ (hydrogen) and $CO_2$ (carbon dioxide) as a raw material, and performing, in a single stage, a reverse water gas shift reaction in which $CO_2$ is reduced to CO (carbon monoxide) and an FT synthesis reaction in which CO is converted into hydrocarbons. The carbon dioxide reduction catalyst according to the present embodiment contributes to both the reverse water gas shift reaction and the FT synthesis reaction.

Fe is contained as a catalytic metal in the carbon dioxide reduction catalyst and may be in the form of a compound such as an oxide, a carbonate compound, a nitrate compound, or a sulfate compound, and is preferably an oxide. Two or more of these compounds may be contained. Further, Fe is more preferably contained, as a catalytic metal, in the form of an Fe-Co composite oxide containing Fe and Co. By using the catalytic metals containing the Fe-Co composite oxide, since Co itself has carbon growth reactivity, the growth of the carbon chain can be promoted compared to compounds such as iron oxide.

The content of Fe with respect to the catalytic metals in the carbon dioxide reduction catalyst is preferably, for example, 65 to 75 mass% in terms of metal atoms.

Co is contained as a catalytic metal in the carbon dioxide reduction catalyst and may be in the form of a compound such as an oxide, a carbonate compound, a nitrate compound, or a sulfate compound, like Fe, and is preferably an oxide. Two or more of these compounds may be contained. Co is more preferably contained, as a catalytic metal, in the form of an Fe-Co composite oxide containing Fe and Co.

The content of Co with respect to the catalytic metals in the carbon dioxide reduction catalyst is preferably, for example, 15 to 25 mass% in terms of metal atoms. By setting the content of Co to 15 mass% or more, the carbon growth reactivity of Co itself can be exhibited. By setting the content of Co to 25 mass% or less, the generation of methane as a by-product can be suppressed. Further, the iron catalyst's function of reducing carbon dioxide to carbon monoxide (reverse water gas shift reaction) can be maintained.

Zn is contained as a catalytic metal in the carbon dioxide reduction catalyst and may be in the form of a compound such as an oxide, a carbonate compound, a nitrate compound, or a sulfate compound, like Fe, and is preferably an oxide. Zn is more preferably contained, as a catalytic metal, in the form of an Fe-Co-Zn composite oxide containing Fe and Co.

When Zn is contained in the carbon dioxide reduction catalyst together with Fe and Co, a spinel crystal structure including these metals (for example, $Zn(FeCo)_2O_4$) can be obtained. This reduces the coordination number of Fe with oxygen atoms compared to, for example, $Fe_3O_4$ or $(FeCo)_3O_4$ that does not include Zn. Zn has a lower oxidation-reduction potential than Fe and is more easily oxidized. Therefore, it is considered that the oxidation of Fe is suppressed, the progress of the oxidation-reduction cycle of the FT synthesis is promoted, and the reactivity is enhanced.

The content of Zn with respect to the catalytic metals in the carbon dioxide reduction catalyst is 7.5 to 12.5 mass% in terms of metal atoms. By setting the content of Zn to 7.5 mass% or more, the production of lower hydrocarbons such as $CH_4$ is suppressed, and the effect of growing the carbon chains of the produced hydrocarbons is obtained. By setting the content of Zn to 12.5 mass% or less, it is possible to suppress a decrease in activity caused by Zn coating the reaction sites of Fe.

Na functions as a co-catalyst among the catalytic metals. Na is preferably present on the surface of the above composite oxide in the form of an oxide or the like separately from the composite oxide. An alkali metal such as Li, K, Rb, or Cs may be included as a catalytic metal instead of Na or together with Na.

The content of Na with respect to the catalytic metals in the carbon dioxide reduction catalyst is preferably 0.5 to 1.5 mass%, and more preferably 1.0 mass%. By setting the content of Na to 0.5 mass% or more, the basicity of the iron catalyst can be increased, and the production efficiency of hydrocarbons having carbon numbers of 8 to 16 can be sufficiently improved. Further, by setting the content of Na to 1.5 mass% or less, it is possible to avoid an adverse effect caused by the coating of the reaction site of Fe with Na, to suppress the generation of carbon monoxide as a by-product, and to prevent a decrease in catalytic activity.

<<Second Embodiment>>

The carbon dioxide reduction catalyst according to the present embodiment essentially contains Fe (iron), Co (cobalt), and Al (aluminum) as catalytic metals. In addition, Na (sodium) is preferably further contained. The carbon dioxide reduction reaction using the carbon dioxide reduction catalyst according to the present embodiment is a reaction of producing hydrocarbons by using a mixed gas of $H_2$ (hydrogen) and $CO_2$ (carbon dioxide) as a raw material, and performing, in a single stage, a reverse water gas shift reaction in which $CO_2$ is reduced to CO (carbon monoxide) and an FT synthesis reaction in which CO is converted into hydrocarbons. The carbon dioxide reduction catalyst according to the present embodiment contributes to both the reverse water gas shift reaction and the FT synthesis reaction.

Among the catalytic metals according to the present embodiment, Fe (iron), Co (cobalt), and Na (sodium) may have the same features (types, aspects, contents, etc. of compounds) as those of a first embodiment.

When Al is contained in the carbon dioxide reduction catalyst together with Fe and Co, a spinel crystal structure (for example, $Al(FeCo)_2O_4$) including these metals can be obtained. This reduces the coordination number of Fe with oxygen atoms compared to, for example, $Fe_3O_4$ or $(FeCo)_3O_4$ that does not include Al. Al has a lower oxidation-reduction potential than Fe and is more easily oxidized. Therefore, it is considered that the oxidation of Fe is suppressed, the progress of the oxidation-reduction cycle of the FT synthesis is promoted, and the reactivity is enhanced.

The content of Al with respect to the catalytic metals in the carbon dioxide reduction catalyst is 8.5 to 11.5 mass% in terms of metal atoms. By setting the content of Al to 8.5 mass% or more, the production of lower hydrocarbons such as $CH_4$ is suppressed, and the effect of growing the carbon chains of the produced hydrocarbons is obtained. By setting the content of Al to 11.5 mass% or less, it is possible to suppress a decrease in activity due to the coating of the reaction site of Fe with Al.

(Method for Producing Carbon Dioxide Reduction Catalyst)

The method for producing a carbon dioxide reduction catalyst preferably includes a hydrothermal synthesis step and an impregnation step.

(Hydrothermal Synthesis Step)

The hydrothermal synthesis step is a step of extracting a precipitate, which is a catalyst precursor, from an aqueous solution in which predetermined amounts of a nitrate of Fe, a nitrate of Co, and a nitrate of Zn or Al are dissolved in an aqueous urea solution by a hydrothermal synthesis method. An Fe-Co-Zn composite oxide or an Fe-Co-Al composite oxide is formed by the hydrothermal synthesis step. In the hydrothermal synthesis step, it is preferable to obtain a precipitation solution by subjecting the aqueous solution containing Fe, Co, and Zn or Al to a hydrothermal synthesis step using an autoclave. Thereafter, the precipitate is separated from the precipitation solution by filtration, washing, etc., and dried to obtain a precipitate (Fe-Co-Zn composite oxide or Fe-Co-Al composite oxide) that is a catalyst precursor.

(Impregnation Step)

The impregnation step is a step of adding dropwise an aqueous solution containing Na onto the precipitate obtained in the hydrothermal synthesis step, drying the precipitate for a predetermined period of time, and calcining the resulting powder at a predetermined temperature. The impregnation step allows the Na compound to be more heavily distributed closer to the surface of the composite oxide. Examples of the aqueous solution containing Na include an aqueous $NaNO_3$ solution. The aqueous $NaNO_3$ solution can be added dropwise under ultrasonic vibration. This allows the Na compound to exist closer to the surface of the composite oxide and uniformly in the vicinity of the surface of the composite oxide. The calcining temperature may be, for example, 550°C, and the calcining time may be 4 hours.

<Carbon Dioxide Reduction Catalyst Device>

<<First Embodiment>>

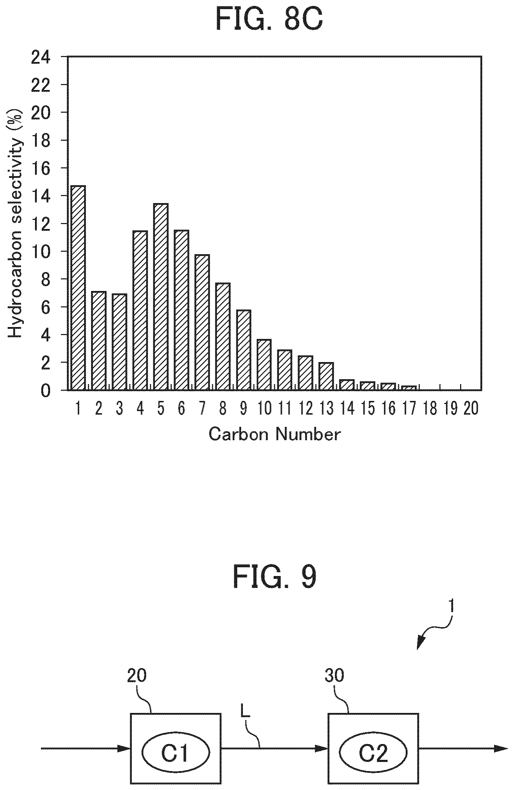

As shown in FIG. 9, a second catalyst C1 containing Fe and at least one of Ga or Zr as catalytic metals is preferably disposed upstream of a carbon dioxide reduction catalyst C2 according to the above embodiment. The carbon dioxide reduction catalyst C2 and the second catalyst C1 are respectively disposed, for example, in catalytic reactors 30 and 20, and are connected to each other by a flow path L, and are used as a carbon dioxide reduction catalyst device 1.

(Second Catalyst)

The second catalyst C1 essentially contains Fe (iron) and contains at least one of Ga (gallium) or Zr (zirconium), as catalytic metals. In addition, the second catalyst C1 preferably further contains Na (sodium). The carbon dioxide reduction reaction using the second catalyst C1 according to the present embodiment is a reaction of producing hydrocarbons by using a mixed gas of $H_2$ (hydrogen) and $CO_2$ (carbon dioxide) as a raw material, and performing, in a single stage, a reverse water gas shift reaction in which $CO_2$ is reduced to CO (carbon monoxide) and an FT synthesis reaction in which CO is converted into hydrocarbons. The catalyst according to the present embodiment contributes to both the reverse water gas shift reaction and the FT synthesis reaction.

Fe, as a catalytic metal, contained in the second catalyst C1 may be in the form of a compound such as an oxide, a carbonate compound, a nitrate compound, or a sulfate compound, and is preferably an oxide. Two or more of these compounds may be contained. Further, the Fe is more preferably contained, as a catalytic metal, in the form of at least one of an Fe-Ga composite oxide containing Fe and Ga or an Fe-Zr composite oxide containing Fe and Zr. By using the catalytic metals containing at least one of the Fe-Ga composite oxide or the Fe-Zr composite oxide, the degree of carbidization of the Fe particles can be increased in the FT synthesis reaction, thereby promoting a $CH_2$ growth reaction on the catalyst and promoting the growth of the carbon chains.

The content of Fe with respect to the catalytic metals in the second catalyst C1 is preferably 55 to 90 mass%, and more preferably 60 to 75 mass%, in terms of metal atoms.

Ga, as a catalytic metal, contained in the second catalyst C1 may be in the form of a compound such as an oxide, a carbonate compound, a nitrate compound, or a sulfate compound, like Fe, and is preferably an oxide. Two or more of these compounds may be contained. Ga is more preferably contained, as a catalytic metal, in the form of an Fe-Ga composite oxide containing Fe and Ga.

The content of Ga with respect to the catalytic metals in the second catalyst C1 is preferably 10 to 30 mass%, and more preferably 20 to 30 mass%, in terms of metal atoms. When the content of Ga is less than 10 mass%, the catalytic metals may not be sufficiently micronized. By setting the content of Ga to 30 mass% or less, it is possible to avoid an adverse effect caused by coating the reaction sites of Fe with Ga, and to prevent a decrease in catalytic activity.

Zr, as a catalytic metal, contained in the second catalyst C1 may be in the form of a compound such as an oxide, a carbonate compound, a nitrate compound, or a sulfate compound, like Fe, and is preferably an oxide. Two or more of these compounds may be contained. Zr is more preferably contained, as a catalytic metal, in the form of an Fe-Zr composite oxide containing Fe and Zr.

The catalytic metals of the second catalyst C1 may include both Ga and Zr. When both Ga and Zr are contained as catalytic metals, these catalytic metals are more preferably contained in the form of an Fe-Ga-Zr composite oxide containing Fe, Zr, and Ga. Since the Fe-Ga-Zr composite oxide is micronized compared to compounds such as iron oxide, the reaction sites of the Fe catalyst are increased, so that the reaction time of the FT synthesis reaction, that is, the time for the carbon chains of the produced hydrocarbons to grow can be secured.

Among the catalytic metals of the second catalyst C1, Na (sodium) may have the same features (type, aspect, content, etc. of the compound) as those of the carbon dioxide reduction catalyst according to the above embodiment.

(Catalytic Reactor)

The configurations of the catalytic reactors 20 and 30 in which the carbon dioxide reduction catalyst C2 and the second catalyst C1 according to the above embodiment are disposed are not limited, and known configurations can be applied. For example, a fixed bed flow reactor in which a flow path having a predetermined shape is filled with a powdery, particulate, or pelletized catalyst or a carrier carrying the catalyst can be used.

(Water Trap Part)

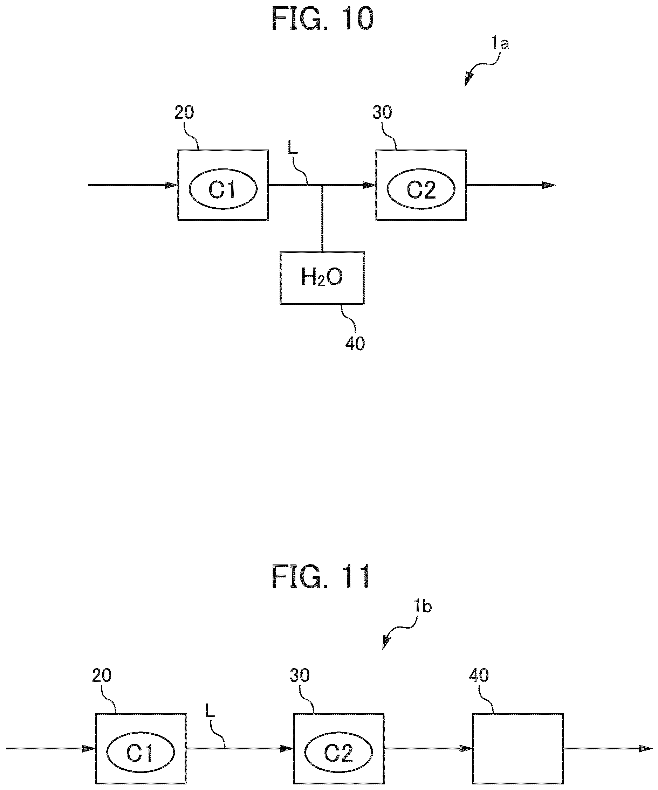

Next, the features of a carbon dioxide reduction catalyst device 1a, which is a modification of the carbon dioxide reduction catalyst device 1 according to the first embodiment, will be described with reference to FIG. 10. In the following description, the same components as those of the first embodiment are denoted by the same reference numerals, and descriptions thereof may be omitted. As shown in FIG. 10, in the carbon dioxide reduction catalyst device 1a, a water trap part 40 is preferably connected to the flow path L that connects the catalytic reactors 20 and 30 to each other. The water trap part 40 removes water from the fluid supplied to the carbon dioxide reduction catalyst. This can shift the chemical equilibrium in the direction of increasing the carbon number of hydrocarbons in the catalytic reaction by the carbon dioxide reduction catalyst. Therefore, the yield of hydrocarbons having carbon numbers of 8 to 16 can be improved.

<<Second Embodiment>>

Next, the configuration of a carbon dioxide reduction catalyst device 1b according to a second embodiment of the present invention will be described with reference to FIG. 11. As shown in FIG. 11, in the carbon dioxide reduction catalyst device 1b, an upgrading device 40 is disposed at the rear of the catalytic reactor 30.

(Upgrading Device)

The upgrading device 40 is a device for upgrading low-grade fractions such as hydrocarbon cracked gas oil obtained by the carbon dioxide reduction reaction in the catalytic reactors 20 and 30. As the upgrading device 40, a known heavy oil cracking unit such as a catalytic cracking unit (FCC) can be used.

(Method for Producing Second Catalyst)

The method for producing a second catalyst according to the present embodiment preferably includes a coprecipitation step and an impregnation step.

(Coprecipitation Step)

The coprecipitation step is a step of extracting a precipitate, which is a catalyst precursor, from an aqueous solution obtained by dissolving predetermined amounts of a nitrate of Fe and at least one of a nitrate of Ga or a nitrate of Zr in distilled water by a coprecipitation method. At least one of an Fe-Ga composite oxide, an Fe-Zr composite oxide, or an Fe-Ga-Zr composite oxide is formed by the coprecipitation step. In the coprecipitation step, it is preferable to obtain a precipitation solution by adding dropwise an aqueous urea solution to the aqueous solution containing Fe and at least one of Ga or Zr. Thereafter, the precipitate is separated from the precipitate solution by filtration, washing, etc., and dried to obtain a precipitate (Fe-Ga composite oxide, Fe-Zr composite oxide, or Fe-Ga-Zr composite oxide) that is a catalyst precursor.

(Impregnation Step)

The impregnation step may be the same as the impregnation step in the method for producing the carbon dioxide reduction catalyst described above.

<Method for Producing Jet Fuel>

A method for producing a jet fuel using the above carbon dioxide reduction catalyst will be described below. The method for producing a jet fuel includes a carbon dioxide reduction step of reducing carbon dioxide using the carbon dioxide reduction catalyst, and an upgrading step of performing an upgrading process on a hydrocarbon obtained in the carbon dioxide reduction step.

The carbon dioxide reduction step is performed using, for example, the catalytic reactors 20 and 30. The carbon dioxide reduction step includes, for example, a second catalyst reaction step of bringing a gas containing carbon dioxide into contact with the second catalyst C1 arranged upstream, and a carbon dioxide reduction catalyst reaction step of bringing a gas containing hydrocarbons produced in the second catalyst reaction step into contact with the carbon dioxide reduction catalyst C2 disposed downstream to increase the carbon number. Between the second catalyst reaction step and the carbon dioxide reduction catalyst reaction step, a step of removing moisture from the gas containing hydrocarbons produced in the second catalyst reaction step by the water trap part 40 may be included.

The catalyst temperature T2 of the carbon dioxide reduction catalyst C2 in the carbon dioxide reduction catalyst reaction step is preferably lower than the catalyst temperature T1 of the second catalyst C1 in the second catalyst reaction step. This allows the activity of Co contained in the carbon dioxide reduction catalyst to be controlled, which can further improve the yield of hydrocarbons having carbon numbers of 8 to 16.

The catalyst temperature T1 is preferably, for example, 340 to 400°C, and the catalyst temperature T2 is preferably, for example, 260 to 340°C.

Alternatively, the carbon dioxide reduction step may be a step of producing hydrocarbons using only the carbon dioxide reduction catalyst.

The upgrading step is a step of upgrading low-grade fractions such as hydrocarbon cracked gas oil obtained by the carbon dioxide reduction step to obtain a jet fuel. The upgrading process can be performed using a known heavy oil cracking unit such as a catalytic cracking unit (FCC).

The present invention is not limited to the above-described embodiments, and modifications and improvements within a range capable of achieving the object of the present invention are included in the present invention.

EXAMPLES

Next, examples of the present invention will be described, but the present invention is not limited to these examples.

<Example 1>

[Preparation of Carbon Dioxide Reduction Catalyst]

A nitrate of Fe (Fe(NO$_3$)$_3$ · 9H$_2$O) as a catalytic metal in a carbon dioxide reduction catalyst C2, a nitrate of Co

($Co(NO_3)_2 \cdot 6H_2O$) as a catalytic metal in the carbon dioxide reduction catalyst C2, and a nitrate of Al ($Al(NO_3)_3 \cdot 9H_2O$) as a catalytic metal in the carbon dioxide reduction catalyst C2 were weighed so that the mass ratio of Fe:Co:Al in terms of metal atoms was 67.5:22.5:10, and dissolved in urea water. Next, the aqueous solution was stirred for 1 hour, and then transferred to an autoclave vessel and subjected to hydrothermal synthesis at 120°C for 12 hours to obtain a precipitate solution containing Fe, Co, and Al as precipitates. Then, the precipitate solution was aged at room temperature for 24 hours, and the precipitate was separated by repeating filtration and washing. The separated precipitate was dried at 60°C for 12 hours to obtain an Fe-Co-Al catalyst precursor.

An aqueous $NaNO_3$ solution was added dropwise to the Fe-Co-Al catalyst precursor under ultrasonic vibration at 92 kHz so that the content of Na was 1.0 mass%. Then, the mixture was dried under vacuum at 5000 Pa for 1 hour, and further dried at 60°C under normal pressure for 12 hours to obtain a powder. The obtained powder was calcined at 550°C for 4 hours to obtain a carbon dioxide reduction catalyst C2 according to Example 1. The content of Al with respect to the catalytic metals was 10 mass%.

[Preparation of Second Catalyst]

A nitrate of Fe ($Fe(NO_3)_3 \cdot 9H_2O$) as a catalytic metal in a second catalyst C1, a nitrate of Zr ($ZrO(NO_3)_2 \cdot 2H_2O$) as a catalytic metal in the second catalyst C1, and a nitrate of Ga ($Ga(NO_3)_3 \cdot 6H_2O$) as a catalytic metal in the second catalyst C1 were weighed so that the mass ratio of Fe:Zr:Ga in terms of metal atoms was 6:1:3, and dissolved in distilled water. Next, while stirring the aqueous solution, an aqueous $CH_4N_2O$ solution was added dropwise at a rate of 2 ml/min to fix the pH at 8.5, thereby obtaining a precipitate solution containing Fe, Zr, and Ga as precipitates. Then, the precipitate solution was aged at room temperature for 24 hours, and the precipitate was separated by repeating filtration and washing. The separated precipitate was dried at 60°C for 12 hours to obtain an Fe-Ga-Zr catalyst precursor.

An aqueous $NaNO_3$ solution was added dropwise to the Fe-Ga-Zr catalyst precursor under ultrasonic vibration at 92 kHz so that the content of Na was 1.0 mass%. Then, the mixture was dried under vacuum at 5000 Pa for 1 hour, and further dried at 60°C under normal pressure for 12 hours to obtain a powder. The obtained powder was calcined at 550°C for 4 hours to obtain a second catalyst C1 according to Example 1.

[Preparation of Carbon Dioxide Reduction Catalyst Device]

A carbon dioxide reduction catalyst device 1a was prepared using the carbon dioxide reduction catalyst C2 and the second catalyst C1 obtained as described above. As the catalytic reactors 20 and 30, fixed bed flow reactors were used, and 0.25 g of a carbon dioxide reduction catalyst C2 in the form of pellets of 0.4 to 0.8 mm square was used. The pellets were loaded in a reaction tube (inner diameter: 6 mm) at a length of 5 cm. The second catalyst also had the same shape, weight, and loading volume. A water trap part 40 was provided in the flow path L connecting the catalytic reactors 20 and 30 to each other. For the reaction temperature, the catalyst temperature T1 of the second catalyst was 380°C, and the catalyst temperature T2 of the carbon dioxide reduction catalyst was 300°C.

<Example 2>

A carbon dioxide reduction catalyst C2 was prepared in the same manner as in Example 1 except that a nitrate of Zn ($Zn(NO_3)_2 \cdot 6H_2O$) as a catalytic metal was used instead of the nitrate of Al as the catalytic metal.

<Comparative Example 1>

A carbon dioxide reduction catalyst C2 was prepared in the same manner as in Example 1 except that the nitrate of Al as the catalytic metal was not used.

<Comparative Examples 2 to 4>

A carbon dioxide reduction catalyst C2 was prepared in the same manner as in Example 1 except that the amount of a nitrate of Al was adjusted so that the content of Al as a catalytic metal was 5 mass% (Comparative Example 2), 15 mass% (Comparative Example 3), and 20 mass% (Comparative Example 4). As the content of Al increased or decreased, the contents of Fe and Co were increased or decreased at a ratio of Fe:Co = 3:1 in terms of metal atoms.

<Comparative Examples 5 to 7>

A carbon dioxide reduction catalyst C2 was prepared in the same manner as in Example 2 except that the amount of a nitrate of Zn was adjusted so that the content of Zn as a catalytic metal was 5 mass% (Comparative Example 5), 15 mass% (Comparative Example 6), and 20 mass% (Comparative Example 7). As the content of Zn increased or decreased, the contents of Fe and Co were increased or decreased at a ratio of Fe:Co = 3:1 in terms of metal atoms.

[Evaluation]

A carbon dioxide reduction reaction was carried out by the following method using the carbon dioxide reduction catalyst device of each of the above Examples and Comparative Examples. The reaction gases were 0.28 NL/h of $CO_2$ and 0.84 NL/h of $H_2$ ($CO_2/H_2$ = 1/3). The W/F (catalyst weight/gas flow rate) was 5.0 g·h/mol, and the space velocity SV was 5,000 h$^{-1}$. The pressure was 3 MPa, and the reaction time was 4 hours. The gas components after the catalytic reaction were qualitatively and quantitatively analyzed by on-line gas chromatography (Shimadzu, GC-2014AT, detector: thermal conductivity detector (TCD)) and hydrogen flame ionization detector (FID) (Shimadzu, GC-2014AF). The liquid components after the catalytic reaction were also qualitatively and quantitatively analyzed by offline gas chromatography (Shimadzu, GC-2014AF, detector: hydrogen flame ionization detector (FID)).

($CO_2$ Conversion Ratio)

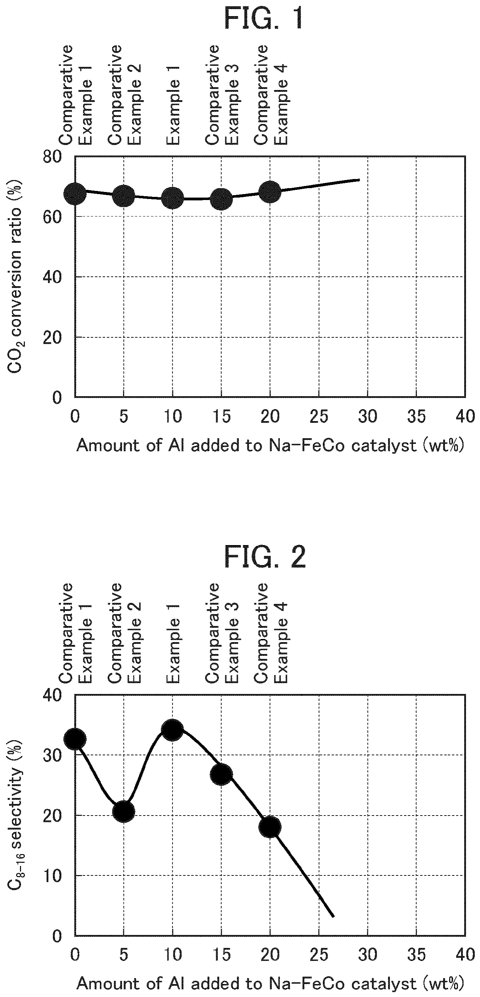

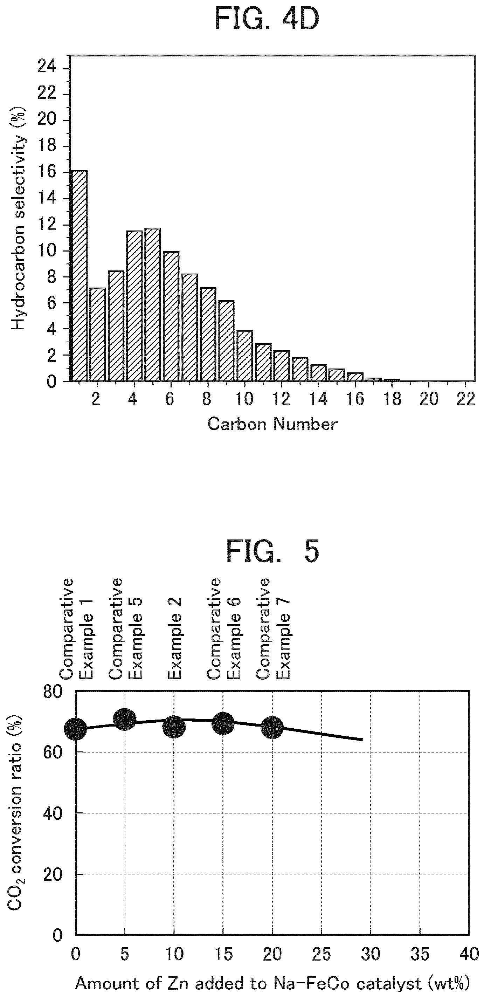

The conversion ratio of $CO_2$ by the carbon dioxide reduction reaction was determined by the following equation (1). The results are shown in FIGS. 1 and 5. $CO_2$ conversion ratio (%) = (($CO_2$ concentration before reaction) - ($CO_2$ concentration after reaction) / ($CO_2$ concentration before reaction) $\times$ 100 ... (1)

($C_{8\text{-}16}$ Selectivity)

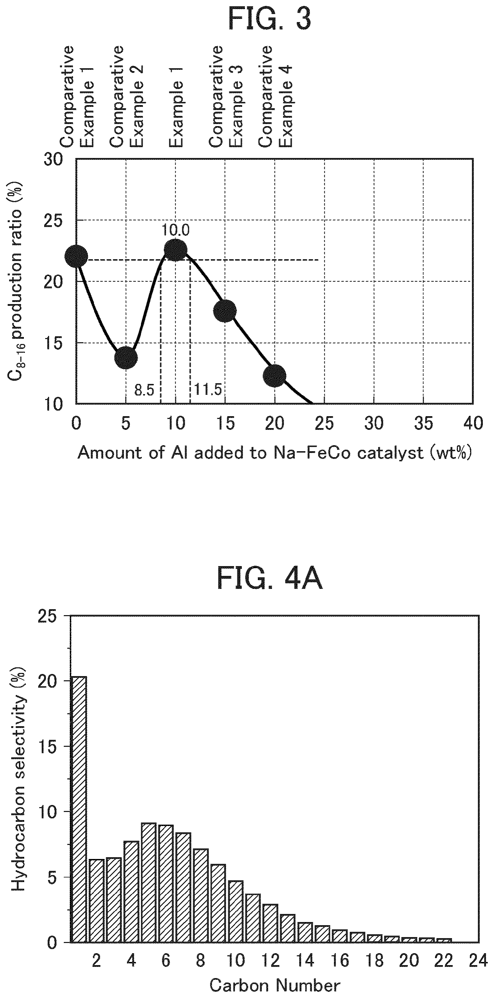

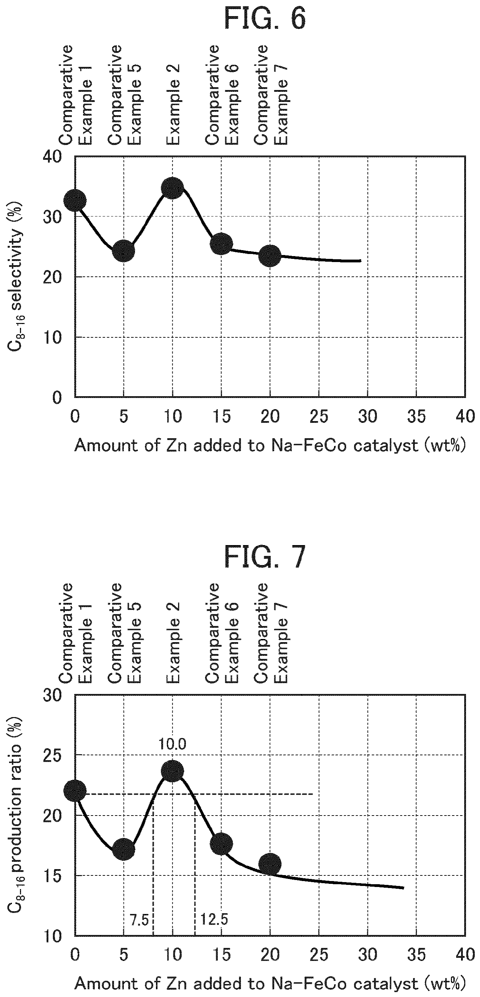

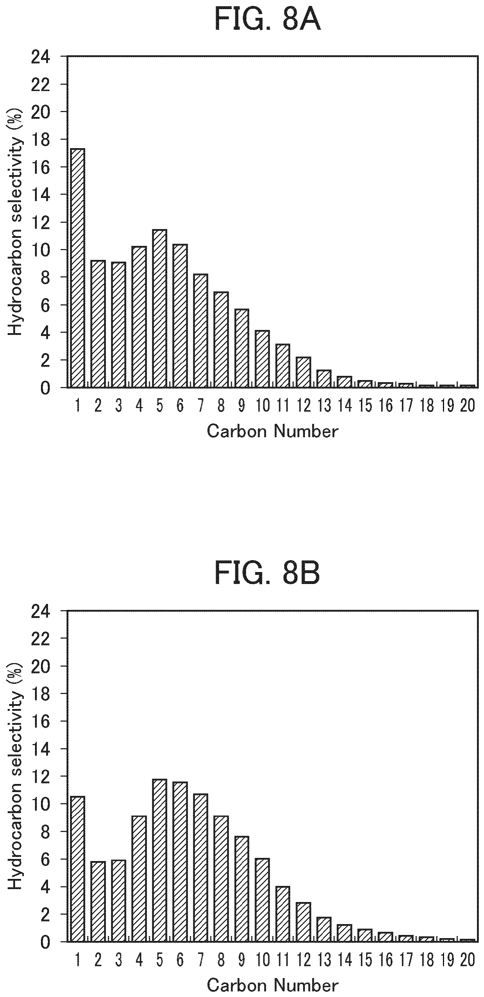

The selectivity of hydrocarbons ($C_{8\text{-}16}$) having carbon numbers of 8 to 16 produced by the carbon dioxide reduction reaction was determined by the following equation (2). The results are shown in FIGS. 2 and 6. The selectivity of hydrocarbons having each carbon number was determined in the same manner as in the following equation (2). The results are shown in FIGS. 4A to 4D and 8A to 8C. $C_{8\text{-}16}$ selectivity (%) = ($C_{8\text{-}16}$-containing component concentration) / (($CO_2$ concentration before reaction) - ($CO_2$ concentration after reaction) $\times$ 100 ... (2)

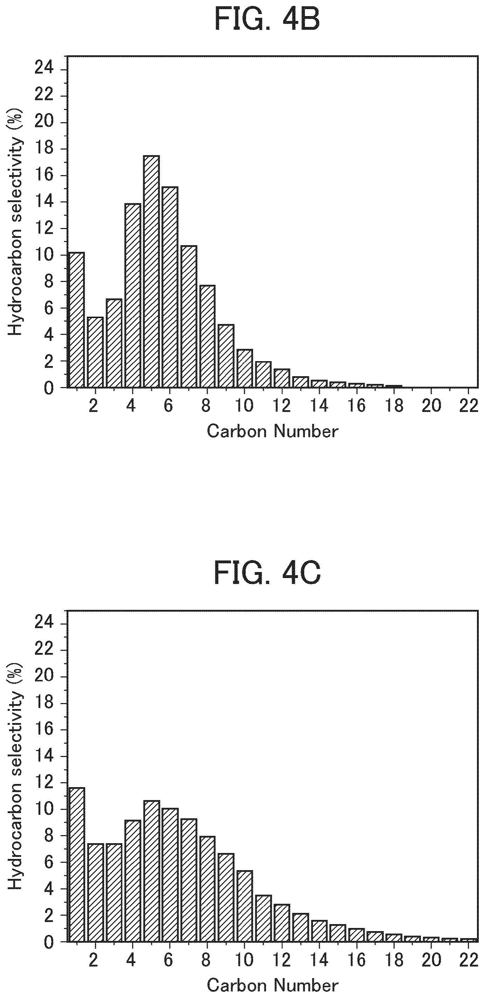

FIG. 4A is a graph showing the carbon numbers of hydrocarbons produced by the carbon dioxide reduction catalyst device according to Comparative Example 1 and the selectivity of hydrocarbons for each carbon number. Similarly, FIG. 4B is a graph corresponding to Comparative Example 2, FIG. 4C is a graph corresponding to Example 1, and FIG. 4D is a graph corresponding to Comparative Example 2. When FIGS. 4A and 4B are compared with each other, by increasing the content of Al from 0 mass% to 5 mass%, hydrocarbons having carbon numbers of 1 grow into hydrocarbons having carbon numbers of 2 or more, while the selectivity of hydrocarbons having carbon numbers of 8 to 16 does not change significantly. In FIG. 4C, when the content of Al is 10 mass%, the selectivity of hydrocarbons having carbon numbers of 8 to 16 increases. In FIG. 4D, when the content of Al is 15 mass%, the selectivity of hydrocarbons having carbon numbers of 1 increases, while the selectivity of hydrocarbons having carbon numbers of 8 to 16 decreases.

Similarly, FIG. 8A is a graph corresponding to Comparative Example 5, FIG. 8B is a graph corresponding to Example 2, and FIG. 8C is a graph corresponding to Comparative Example 6. When FIGS. 4A and 8A are compared with each other, by increasing the content of Zn from 0 mass% to 5 mass%, hydrocarbons having carbon numbers of 1 grow into hydrocarbons having carbon numbers of 2 or more, while the selectivity of hydrocarbons having carbon numbers of 8 to 16 does not change significantly. In FIG. 8B, when the content of Zn is 10 mass%, the selectivity of hydrocarbons having carbon numbers of 8 to 16 increases. In FIG. 8C, when the content of Zn is 15 mass%, the selectivity of hydrocarbons having carbon numbers of 1 increases, while the selectivity of hydrocarbons having carbon numbers of 8 to 16 decreases.

($C_{8\text{-}16}$ Production Ratio (Yield))

The production ratio of hydrocarbons ($C_{8\text{-}16}$) having carbon numbers of 8 to 16 produced by the carbon dioxide reduction reaction was determined by the following equation (3). The results are shown in FIG. 3 and 7. $C_{8\text{-}16}$ production ratio (%) = $CO_2$ conversion ratio $\times$ $C_{8\text{-}16}$ selectivity / 100 ... (3)

In FIG. 3, the least squares approximation was performed for the $C_{8\text{-}16}$ production ratios at Al contents of 5, 10, 15, and 20 mass%. The obtained approximate equation is shown in the following equation (4).

$$(C_{8\text{-}16} \text{ production ratio (\%)}) = 0.0179x^3 - 0.8129x^2 + 10.817x - 22.246 \tag{4}$$

In the above equation (4), x means the content of Al (mass%). From the above equation (4), the content of Al with respect to the catalytic metals at which the $C_{8\text{-}16}$ production ratio (%) exceeding the $C_{8\text{-}16}$ production ratio (%) of Comparative Example 1 having an Al content of 0 mass% was obtained was calculated to be 8.5 to 11.5 mass%.

In FIG. 7, the least squares approximation was performed for the $C_{8-16}$ production ratios at Zn contents of 5, 10, and 15 mass%. The obtained approximate equation is shown in the following equation (5).

$$(C_{8-16} \text{ production ratio } (\%)) = -0.2503x^2 + 5.0524x - 1.8381$$

$$\ldots (5)$$

In the above equation (5), x means the content of Zn (mass%). From the above equation (5), the content of Zn with respect to the catalytic metals at which the $C_{8-16}$ production ratio (%) exceeding the $C_{8-16}$ production ratio (%) of Comparative Example 1 having a Zn content of 0 mass% was obtained was calculated to be 7.5 to 12.5 mass%.

As shown in FIGS. 3 and 7, it is clear that the carbon dioxide reduction catalyst device according to each example has a higher $C_{8-16}$ production ratio (yield) than the carbon dioxide reduction catalyst device according to each comparative example. In FIGS. 3 and 7, it is clear that a high $C_{8-16}$ production ratio (yield) can be obtained by setting the content of Al to 8.5 to 11.5 mass% and the content of Zn to 7.5 to 12.5 mass%, respectively.

**Claims**

1. A carbon dioxide reduction catalyst for reducing carbon dioxide by a hydrogenation reaction of carbon dioxide to produce hydrocarbons,

   the carbon dioxide reduction catalyst comprising Fe, Co, and Zn as catalytic metals,
   wherein the Zn has a content of 7.5 to 12.5 mass%.

2. A carbon dioxide reduction catalyst for reducing carbon dioxide by a hydrogenation reaction of carbon dioxide to produce hydrocarbons,

   the carbon dioxide reduction catalyst comprising Fe, Co, and Al as catalytic metals,
   wherein the Al has a content of 8.5 to 11.5 mass%.

3. The carbon dioxide reduction catalyst according to claim 1 or 2,

   further comprising Na as a catalytic metal,
   wherein the Na has a content of 0.5 to 1.5 mass%.

4. A carbon dioxide reduction catalyst device, comprising a second catalyst comprising Fe and at least one of Ga or Zr as catalytic metals, disposed upstream of the carbon dioxide reduction catalyst according to claim 1 or 2.

5. A method for producing a jet fuel, comprising:

   reducing carbon dioxide using the carbon dioxide reduction catalyst according to claim 1 or 2; and
   performing an upgrading process on a hydrocarbon obtained by reducing the carbon dioxide.

# FIG. 1

# FIG. 2

# FIG. 3

# FIG. 4A

# FIG. 4B

# FIG. 4C

## FIG. 4D

## FIG. 5

# FIG. 6

# FIG. 7

## FIG. 8A

## FIG. 8B

## FIG. 8C

## FIG. 9

# FIG. 10

# FIG. 11

## INTERNATIONAL SEARCH REPORT

| International application No. |
|---|
| **PCT/JP2024/009815** |

**A. CLASSIFICATION OF SUBJECT MATTER**

***B01J 23/78***(2006.01)i; ***B01J 23/80***(2006.01)i; ***B01J 23/825***(2006.01)i; ***C10G 2/00***(2006.01)i
FI:   B01J23/78 M; B01J23/80 M ZAB; B01J23/825 Z; C10G2/00

According to International Patent Classification (IPC) or to both national classification and IPC

**B. FIELDS SEARCHED**

Minimum documentation searched (classification system followed by classification symbols)

B01J23/78; B01J23/80; B01J23/825; C10G2/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/215408 A1 (TOKYO METROPOLITAN PUBLIC UNIV CORPORATION) 28 October 2021 (2021-10-28) <br> claims 1-5, paragraphs [0037]-[0040] | 1-5 |
| A | JP 2018-158279 A (IWATANI INT CORP.) 11 October 2018 (2018-10-11) <br> claims 1-8, paragraphs [0073]-[0106] | 1-5 |
| A | JP 2019-188340 A (NIPPON STEEL CORPORATION) 31 October 2019 (2019-10-31) <br> claims 1-9, paragraphs [0005]-[0006], [0014], [0058]-[0077] | 1-5 |
| A | WO 2022/169536 A1 (INFINIUM TECHNOLOGY, LLC) 11 August 2022 (2022-08-11) <br> entire text, all drawings | 1-5 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 April 2024** | **14 May 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/009815**

| Patent document cited in search report | | | Publication date (day/month/year) | Patent family member(s) | | | Publication date (day/month/year) |
|---|---|---|---|---|---|---|---|
| WO | 2021/215408 | A1 | 28 October 2021 | US | 2023/0166242 | A1 | |
| | | | | claims 1-10, paragraphs [0062]-[0064] | | | |
| | | | | EP | 4137231 | A1 | |
| | | | | CN | 115551636 | A | |
| JP | 2018-158279 | A | 11 October 2018 | (Family: none) | | | |
| JP | 2019-188340 | A | 31 October 2019 | (Family: none) | | | |
| WO | 2022/169536 | A1 | 11 August 2022 | JP | 2024-513288 | A | |
| | | | | entire text, all drawings | | | |
| | | | | US | 2022/0251455 | A1 | |
| | | | | EP | 4288511 | A1 | |
| | | | | KR | 10-2023-0129189 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4516682 B
- JP 2005537340 W